# EUROPEAN PATENT APPLICATION

(11) **EP 2 060 419 A1**
(43) Date of publication of application: **20.05.2009**
(21) Application number: 08703270.2
(22) Date of filing: 16.01.2008
(51) Int. Cl.: B60H 1/00, H02K 5/00, H02K 5/04, H02K 5/24

(54) **MOUNTING STRUCTURE OF MOTOR AND ACTUATOR FOR VEHICLE**

(30) Priority: 19.01.2007 JP 2007009771
(71) Applicant: Calsonic Kansei Corporation, Saitama 331-0823 (JP)
(72) Inventor: HAYAKAWA, Yuki, Saitama-shi, Saitama 3310823 (JP); TAKAHASHI, Hideyuki, Saitama-shi, Saitama 3310823 (JP); TANAKA, Kaoru, Saitama-shi, Saitama 3310823 (JP); KAWABATA, Tomohiro, Sano-shi Tochigi 327-0816 (JP)
(74) Representative: Köhler, Walter
(86) International application number: PCT/JP2008/050409
(87) International publication number: WO 2008/087962

(57) **Abstract**

A motor-mounting structure includes a case (101,102) containing a motor (2) in which a bearing portion (22) is projected from an end surface (211) of a main body (21), and a pair of brackets (11, 12) provided on the case (101, 102) and configured to pinch the bearing portion (22) of the motor (2). Elastic pinching arms (11a, 11a) are provided on a leading end portion of one of the pair of brackets and configured to elastically pinch the bearing portion. An interval (11b) between the elastic pinching arms (11a, 11a) is set to be smaller than outer diameter of the bearing portion (22).

## Description

### TECHNICAL FIELD

The present invention relates to a motor-mounting structure and an actuator for a vehicle including the motor mounting structure.

### BACKGROUND ART

Conventionally, a plurality of actuators are provided in a driving mechanism section of a vehicle.

For example, in an air conditioner or the like for an automobile, there is used an actuator configured to transmit rotation of a motor to an output gear through a plurality of gears. The actuator is configured to adjust opening and closing of an opening and closing door for the air conditioner by the rotation of the output gear.

The motor includes a rotation shaft (driving shaft) to which gears are connected, a cylindrical main body, and cylindrical bearing portions configured to project from end surfaces of the main body.

When the motor is rotated depending on the operation of the actuator, as reaction thereof, a load from the opening and closing door may be operated to the motor through the gears.

In this case, the bearing portions of the motor are held by brackets provided on a case, but, if the brackets have a low working accuracy, there is a problem that looseness of the motor occurs.

Therefore, to prevent the motor from loosening, it has been performed to fix the motor by a thick double-faced adhesive tape provided between the main body of the motor and a case containing the motor.

In addition, as shown in Japanese Patent Application Publication No.2005-96670, there is known a structure in which an annular elastic body is attached to each of bearing portions, and a contacting surface between the elastic body and each of brackets is configured to be inclined.

With the structure, it is possible to absorb oscillation securely and prevent the elastic body from being deteriorated partially.

### DISCLOSURE OF THE INVENTION

### PROBLEM TO BE SOLVED BY THE INVENTION

However, in the method for using the aforementioned double-faced adhesive tape, there are problems of requiring the thick double-faced adhesive tape and additional processes to attach the double-faced adhesive tape.

Even in a method shown in Japanese Patent Application Publication No.2005-96670, there are problems of requiring the annular elastic body and additional processes to attach the elastic body.

An object of the present invention is to provide a motor-mounting structure capable of mounting the motor without generating looseness by a simple structure.

### MEANS FOR SOLVING THE PROBLEM

To accomplish the above object, a motor-mounting structure according to one embodiment of the present invention includes a case containing a motor including a main body and bearing portions provided on end surfaces of the main body to project from the end surfaces, and a pair of brackets provided on the case and configured to pinch the bearing portion of the motor in at least one side of the motor.
Elastic pinching arms configured to elastically pinch the bearing portion are provided on a leading end portion of one of the pair of brackets.
An interval between the elastic pinching arms is set to be lesser than an outer diameter of the bearing portion in a free state of the elastic pinching arms.
As mentioned above, because the bearing portion is elastically supported by the elastic pinching arms, looseness of the motor is not generated.

### BRIEF DESCRIPTION OF THE DRAWINGS

[FIG. 1] FIG. 1 is a front view explaining a constitution of a motor-mounting structure according to a first embodiment of the present invention.
[FIG. 2] FIG. 2 is an explanatory view explaining the entire constitution of an actuator, in which FIG.2A is a plan view and FIG.2B is a sectional view taken along line I - I in FIG.2A.
[FIG. 3] FIG. 3 is an explanatory view explaining an order of mounting the motor-mounting structure according to the first embodiment of the present invention, in which FIG.3A is a front view showing a state before mounting and FIG.3B is a front view showing a state after mounting.
[FIG. 4] FIG. 4 is a side view explaining the constitution of the motor-mounting structure according to the first embodiment of the present invention.
[FIG. 5] FIG. 5 is an explanatory view explaining a pulse width modulation control system.
[FIG. 6] FIG. 6 is a front view explaining a constitution of a motor-mounting structure according to a second embodiment of the present invention.
[FIG. 7] FIG. 7 is an explanatory view explaining a constitution of a motor-mounting structure according to a third embodiment of the present invention, in which FIG.7A is a front view and FIG.7B is a side view.

### BEST MODE FOR CARRYING OUT THE INVENTION

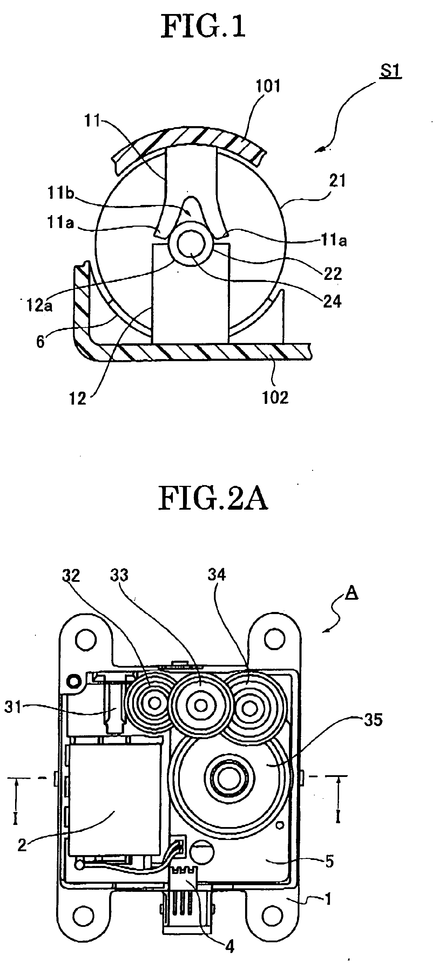

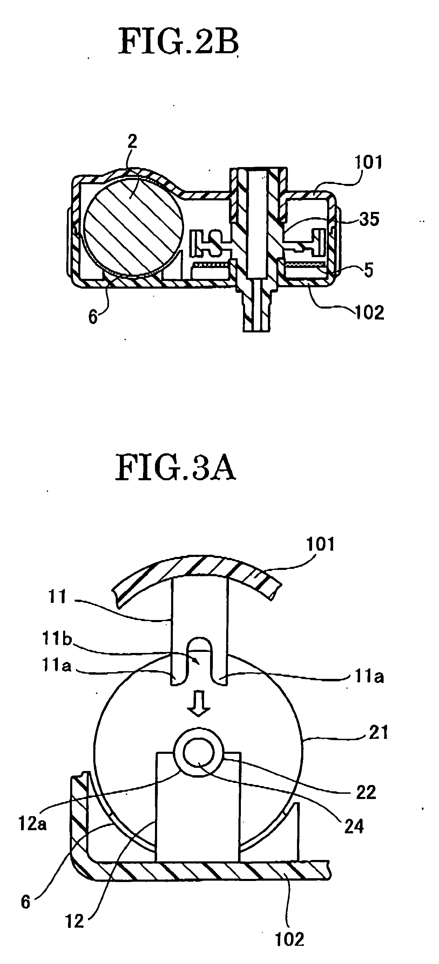

Best modes for carrying out the present invention will be explained in detail hereinafter with reference to the accompanying drawings, based on some embodiments embodying the modes.
First, FIGs.2A and 2B illustrate an actuator A to which a motor-mounting structure S1 according to the present invention is applied.

The actuator A including the motor-mounting structure S1 is used for opening and closing a door (not shown) provided at a blowing port (not shown) of an air-conditioner for a vehicle such as an automobile and is configured to open and close the door to have a function of adjusting an air-blowing amount.

As shown in FIG.2A, the actuator A includes a case 1 to hold the entire shape, a motor 2 contained in the case 1, gears 31, 32, 33, 34 and 35, an power source connector 4, and a substrate 5.

### EMBODIMENTS

### (First Embodiment)

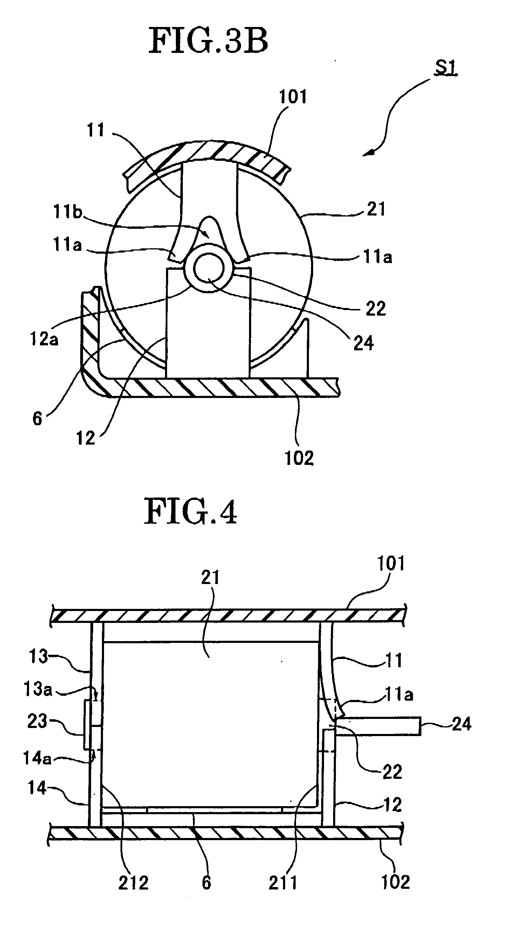

FIG.1, FIG.3A, FIG.3B and FIG.4 illustrate a first embodiment of a motor-mounting structure S1 according to the present invention. A motor 2 includes a main body 21, bearing portions 22 and 23 provided to project from end surfaces 211 and 212 at both sides of the main body 21 in an axial direction thereof, and a shaft 24 supported by the bearing portions 22 and 23, as shown in FIGs.1 and 4.

The main body 21 includes a rotation mechanism such as a coil, a magnet and so on, provided in the main body and configured to rotate the shaft 24 when the rotation mechanism is turned on, and has a cylindrical shape made of a metal or the like.

The shaft 24 is formed in a lengthy cylindrical shape by a metal or the like, and is configured to connect to the rotation mechanism inside the main body 21 and project from a center of the bearing 22 extending from the one end surface 211 of the main body 21. A gear 31 is provided on a projected part of the shaft, in a vicinity of a leading portion of the projected part.

Moreover, the bearings 22 and 23 are made of a metal or the like and provided integrally with the main body 21 and has a cylindrical shape having a smaller outer diameter than that of the main body 21. The bearings rotatably support the shaft 24, with the shaft 24 passing through the center of the bearings.

The case 1 is made of a resin and has a box-like shape including an upper case portion 101 and a lower case portion 102 which are mutually fitted.

In addition, holes or protrusions (not shown) configured to set positions of the gears 31, 32, 33, 34, 35 and the motor 2 are provided in the upper and lower case portions 101 and 102.

In the motor-mounting structure S1 in this embodiment, brackets 11 and 13 are provided on the upper case portion 101, and brackets 12 and 14 are provided on the lower case portion 102, as shown in FIG.4.

The bracket 11 is formed in a plate-like shape by a resin or the like and has at a leading end portion elastic pinching arms 11a and 11a which are disposed to pinch the bearing portion 22 from both sides and hold the bearing portion elastically, and a slit 11b is provided between the elastic pinching arms 11a and 11a, as shown in FIGs.3A, 3B and 4.

The slit 11b is formed so that an interval between mutually facing surfaces of the elastic pinching arms 11a and 11a is set to be lesser than an outer diameter of the bearing portion 22 of the motor 2 and has an appropriate depth. Thereby, the elastic pinching arms are formed so that an elasticity of the elastic pinching arms is lost even when the bearing portion 22 is press-fitted between the elastic pinching arms, as described hereinafter.

Furthermore, because the slit 11b has a circular portion provided in a vicinity of innermost, the elastic pinching arms has no plastic deformation due to stress concentration even when the clastic pinching arms 11a and 11a are elastically deformed.

In addition, the elastic pinching arms 11a and 11a formed on the leading end portion of the bracket 11 are formed in a sheet made of a resin and formed integrally with the upper case portion 101. The elastic pinching arms are formed to be easy to elastically deform when the bearing portion 22 is press-fitted between the elastic pinching arms by chamfering corner portions of the leading end portions of the elastic pinching arms, contacting with the bearing portion 22.

Moreover, the elastic pinching arms 11a and 11a are formed to have an appropriate width, an appropriate thickness and an appropriate length to maintain an appropriate elasticity, even when the bearing portion 22 is press-fitted.

On the other hand, the lower bracket 12 facing the upper bracket 11 is formed in a sheet made of a resin and provided integrally with the lower case portion 102 and has a circular concave portion 12a which is provided in a generally central portion in a width direction of a leading end portion of the lower bracket 12 facing the upper bracket 11 so as to fit a half lower part of the bearing portion 22 therein.

The aforementioned brackets 11 and 12 are formed to have appropriate lengths to pinch the bearing portion 22.

That is to say, by forming the bracket 12 slightly longer than a radius of the main body 21 of the motor 2, the bracket 12 supports the bearing portion 22 without contacting a side surface of the motor 2 with a surface of the lower case portion 102, and the bracket 12 is configured to have a length in which the bearing portion 22 is in contact with generally central portions of the elastic pinching arms 11a and 11a in a length direction thereof, when the bearing portion 22 are press-fitted in the slit 11b of the leading end portion of the bracket.

Similarly, as shown in FIG.4, the bracket 13 is formed in a sheet made of a resin or the like and integrally with the upper case portion 101 and the bracket 14 is formed in a sheet made of a resin or the like and integrally with the lower case portion 102.

The brackets 13 and 14 are provided in a generally central portion of a width direction of a leading end portion of each thereof with circular concave portions 13a and 14a, similarly to the lower bracket 12 shown in FIG.3A and 3B, and therefore it is possible to support the bearing portion 23 when the bearing portion is fitted into the circular concave portions at the leading end portions of the brackets 13 and 14.

In addition, the bracket 13 is formed to have a length that supports the bearing portion 23 without contacting the motor 2 with the lower case portion 102, similarly to the bracket 12, and the bracket 13 is formed to have a length in which a leading end of the bracket 13 is in contact with a leading end of the bracket 14 when pinching the bearing portion 23.

In the motor-mounting structure S1 in the embodiment, a distance between the brackets 11 and 13 is set to be smaller than a length of the main body 21 of the motor 2 in an axial direction thereof, as shown in FIG.4.

Accordingly, when mounting the motor 2, it is necessary to fit the upper case portion 101 provided with the brackets 11 and 13 to the lower case portion 102 on which the motor 2 is disposed.

At this time, if the distance between the brackets 11 and 13 is too short, because the bracket 11 is plastically deformed, it is necessary to set previously an appropriate distance between the brackets so that the brackets are elastically deformed.

Meanwhile, the lower bracket 12 is configured to be disposed in a slightly outer side than a position of the upper bracket 11 in an axial direction of the motor, and thereby the bracket 12 does not contact with the main body 21 of the motor 2.

In addition, in the motor-mounting structure S1 in the embodiment, a double-faced adhesive tape 6 made of a resin or the like is provided between the side surface of the main body 21 of the motor 2 and the surface of the lower case portion, as shown in FIGs.1 and 4.

The double-faced adhesive tape 6 has both surfaces of adherence. Thereby, it is possible to prevent the motor 2 from being moved relative to the lower case portion 102 by a reaction force at the time the motor is rotated.

Meanwhile, because the double-faced adhesive tape 6 may be sufficient to prevent the motor from being rotates, if the double-faced adhesive tape has an appropriate thickness and an appropriate elasticity such that an error of a resin molding of the case portion 102 is absorbed, a material or shape of the double-faced adhesive tape may be optionally set, it is not necessary to use each of a plurality kind of double-faced adhesive tapes.

Next, referring to FIGs.2A and 2B, an operation of the actuator A in the embodiment is described.

An electricity is first supplied from an exterior power source (not shown) to the power source connector 4, and then the electricity supplied from the power connector 4 is supplied to the motor 2 through the substrate 5 to rotate the motor 2.

The rotation of the motor 2 is transmitted through the gear 31 attached to the shaft 24 of the motor 2 to the gears 32. 33, 34 and 35 and is adjusted in number of rotation to allow an opening and closing door (not shown) attached to the gear 35 to open and close.

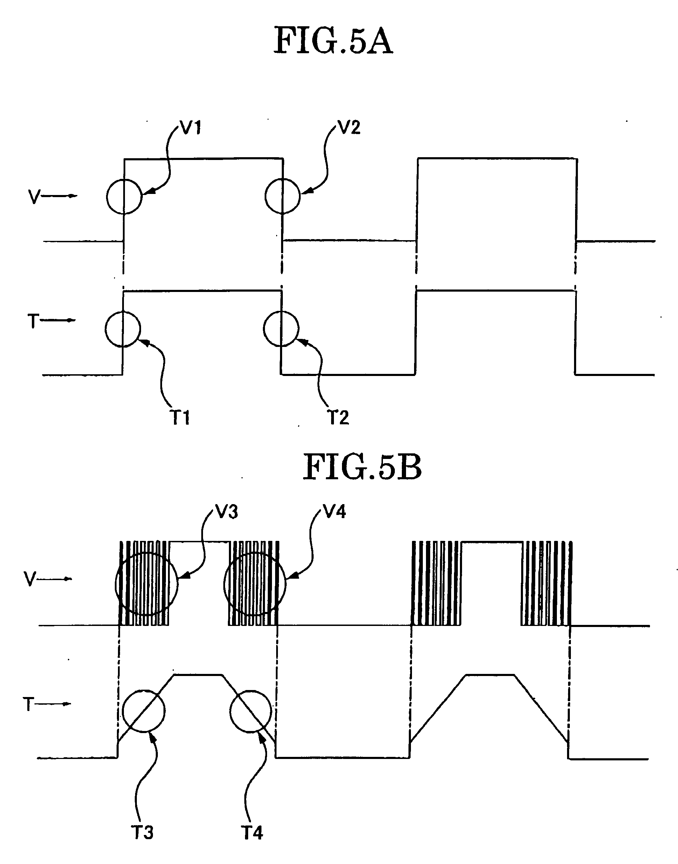

In this case, in the actuator A in the embodiment, it is possible to slowly increase (T3) a rotational torque T of the motor 2 or slowly decrease (T4) by switching on/off of a voltage V at a high speed, as shown in FIG.5B.

By switching the on/off at the high speed in this way, controlling the voltage V applied to the motor 2 as if the voltage is variable is referred to as Pulse Width Modulation (PWM).

The actuator A includes a pulse width modulation controller configured to control the rotation of the motor. The motor 2 can be started and stopped slowly by the pulse width modulation controller.

Next, operation of the motor-mounting structure S1 in the embodiment is described.

In the motor-mounting structure S1 in the embodiment, structured as mentioned above, of the facing brackets 11 and 12 pinching the-bearing portion 22 of the motor 2, a leading end portion of the bracket 11 protruding from the upper case 101 is provided with the elastic pinching arms 11a and 11a pinching the bearing portion 22 elastically, and an interval between the elastic pinching arms 11a and 11a is set to be smaller than an outer diameter of the bearing portion 22, as shown in FIG.3A.

In mounting the motor 2, by moving the case 101 in a direction of white arrow in FIG.3A, the bearing portion 22 is press-fitted in the slit 11b disposed between the elastic pinching arms 11a and 11a and pressed into the circular concave portion 12a provided in the facing lower bracket 12, as shown in FIG.3B.

Accordingly, even if the motor is subject to a reaction force occurring at the time the actuator is actuated, the motor 2 is prevented from looseness being generated.

That is to say, the elastic pinching arms 11a and 11a are elastically deformed to open outwardly and upwardly when the bearing portion 22 is press-fitted, but at this time, an elastic reaction force opposite to the deformed direction and directed inwardly and downwardly is generated in the elastic pinching arms 11a and 11a.

By the elastic reaction force, the bearing portion 22 is pressed against the circular concave portion 12a provided in the facing bracket 12, and the circular concave portion 12a is formed to be fitted to a shape of the bearing portion 22, and therefore the looseness of the motor 2 is prevented.

In addition, even if the circular concave portion 12a has a low accuracy in a forming of resin so that the bearing portion 22 does not fit into the concave portion 12a, an error of the circular concave portion can be absorbed by the elastic deformation of the elastic pinching arms 11a and 11a and a position of the motor 2 can be limited because inward and downward force is permanently applied to the motor by the elastic reaction force.

Moreover, by appropriately selecting a length, a thickness and a material of each of the brackets 11 and 12, because the motor 2 can elastically be supported while allowing a slight movement thereof to a degree that the gear 31 engages with the gear 32, it is possible to prevent fatigue deformation of the brackets 11 and 12 from being generated.

In this way, it is possible to restrain the generation of noise by preventing and absorbing vibration of the motor by use of the elasticity of the elastic pinching arms 11a and 11a.

Furthermore, because the motor 2 can be fixed by the brackets 11 and 12 provided on the cases 101 and 102, it is possible to fix the motor 2 with a simple structure without providing other members specially.

Consequently, it is possible to reduce the number of processes of mounting the motor 2 and provide an inexpensive structure.

In addition, in the motor-mounting structure S1 according to the present embodiment, the distance between the opposite brackets 11 and 13 of the main body 21 of the motor 2 is set to be smaller than an axial length of the main body 21, as shown in FIG.4, and hence an axial movement of the motor 2 can be securely limited.

In other words, because the bracket 11 is elastically deformed axially to be in contact with the end surface 211 of the motor 2 when the upper case portion 101 is fitted to the lower case portion 102, the motor 2 can be pressed against the other brackets 13 and 14 by the elastic reaction of the bracket 11, and therefore the motor 2 can be fixed regardless of the accuracy of resin forming of the brackets 11, 1.2, 13 and 14.

Furthermore, in the motor-mounting structure S1 in the embodiment, because the gear 31 attached directly to the motor 2 is a worm gear, a reaction force on operation of the actuator also occurs in an axial direction of the motor, but the motor can be configured to support a thrust load by providing a structure allowing an axial elastic reaction force to operate in the motor.

In this way, by limiting an axial position of the motor 2 securely, it is possible to prevent a position of the motor 2 from being changed, by way of axial loads in both forward and reverse directions even when the motor 2 is rotated forwardly and reversely.

In addition, the motor-mounting structure S1 in the embodiment because the double-faced adhesive tape 6 is provided between the main body 21 and the lower case portion 102 of the motor 2, as shown in FIGs.1 to 4, it is possible to prevent the motor 2 from being moved by a reaction force.

That is to say, although there is possibility that the motor 2 is turned about the shaft 24 by the reaction force because the main body 21 of the motor 2 used in the embodiment has a cylindrical shape, it is possible to prevent the motor 2 being turned about the shaft 24 by connecting the motor 2 and the lower case portion 102 by use of the double-faced adhesive tape 6.

In this case, because it is not required for the double-faced adhesive tape 6 to have a function of preventing looseness of the motor as in prior art, preparing double-faced adhesive tapes having various thicknesses as in prior art is not necessary. Therefore, it is possible to use a double-faced adhesive tape which is thinner and inexpensive more than that in prior art.

Because it is only sufficient that the double-faced adhesive tape 6 can prevent the movement of the motor, compared with prior art, an easy relative positional adjustment of the double-faced adhesive tape and the motor 2 can be accomplished.

In addition, in the embodiment, because the actuator A can slowly be started and stopped by use of the pulse width modulation controller, the acceleration of each of the motor 2, gears 31,32, 33, 34, 35 and the opening and closing door (not shown) can be limited, and thereby a reaction force due to inertia thereof can be reduced.

In this case, if on-off of the voltage V is performed at a slow speed as in prior art, as shown in FIG.5A, because the voltage V increases suddenly to V1 and decreases suddenly to V2, the rotational torque T of the motor 2 suddenly increases to T1 and suddenly decreases to T2.

Accordingly, the acceleration of each of the motor 2, the gears 31, 32, 33, 34, 35 and the opening and closing door is very large, the reaction force by the inertia becomes very large.

On the other hand, in the actuator A in the embodiment, the rotational torque T of the motor 2 can slowly be increased to T3 and decreased to T4 by switching the on-off of the voltage V at a high speed, as shown in FIG.5B.

Consequently, because the acceleration can be limited at a minimum, the reaction force of each of the motor 2, the gears 31, 32, 33, 34, 35 and the opening and closing door, by the inertia can be minimally restrained.

In this way, it is possible to prevent the looseness of the motor 2 and restrain vibration thereof by forming the elastic pinching arms 11a and 11a on the leading end of the bracket 11 and using the PWM control.

### (Second Embodiment)

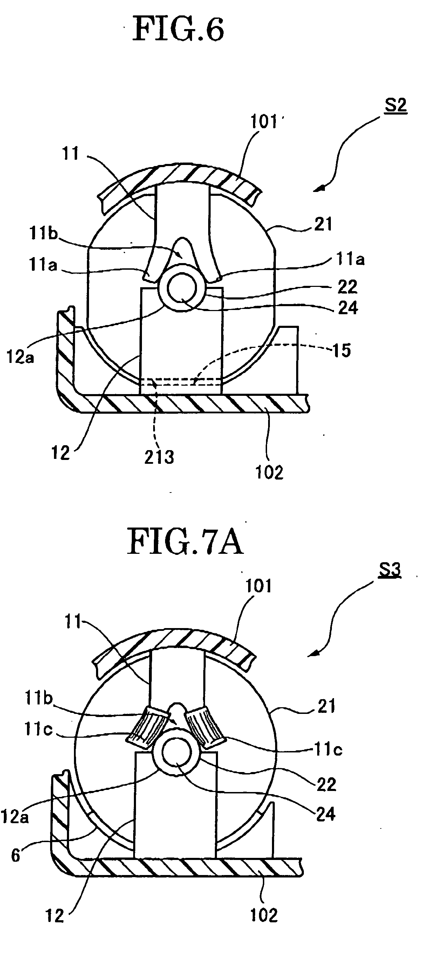

FIG.6 illustrates a second embodiment of the motor-mounting structure according to the present invention.

In the motor-mounting structure S2 in this second embodiment, the identical reference numbers are attached to similar parts to that in the first embodiment.

In the motor-mounting structure S2 in this embodiment, a planar section 213 is provided on an axial side surface of the main body 21 of the motor 2 and a fitted surface 15 is provided on the lower case portion 102 to be fitted to the planar section 213.

In the motor-mounting structure S2 in this embodiment, the main body 21 of the motor 2 has the planar section 213, differently from that in the first embodiment.

The planar section 213 is provided on the side surface of the main body 21 of the motor 2, facing the lower case portion 102 and configured to extend in an axial direction of the main body.

On the other hand, the fitted surface 15 configured to be fitted to the planar section 213 of the motor 2 is provided on a place of the lower case portion 102 contacting with the motor 2.

The fitted surface 15 is made of a resin and formed integrally with the lower case portion 102 and is configured to allow the bearing portions 22 and 23 of the motor 2 to securely fit to the brackets 12 and 14, by being disposed to be slightly separated from a position fitting to the planar section 213 of the motor 2 when the motor 2 is attached to the case portion 102.

In the motor-mounting structure S2 structured as mentioned above, it is possible to prevent the motor 2 from being moved by a simple structure without using the double-faced adhesive tape 6 in the first embodiment.

That is to say, even if the motor 2 is subjected to a reaction force and attempts to move about the shaft 24, the motor cannot be moved because the planar section 213 provided on the motor 2 is engaged with the fitted surface 15 provided on the case portion 102.

In this case, the fitted surface 15 is disposed to be slightly separated from a position fitting to the planar section 213 of the motor 2. Accordingly, the motor can be moved slightly. Huwever, when the planar section 213 and the fitted surface 15 are in contact with each other by the slight movement of the motor, the motor cannot be moved any more.

### (Third Embodiment)

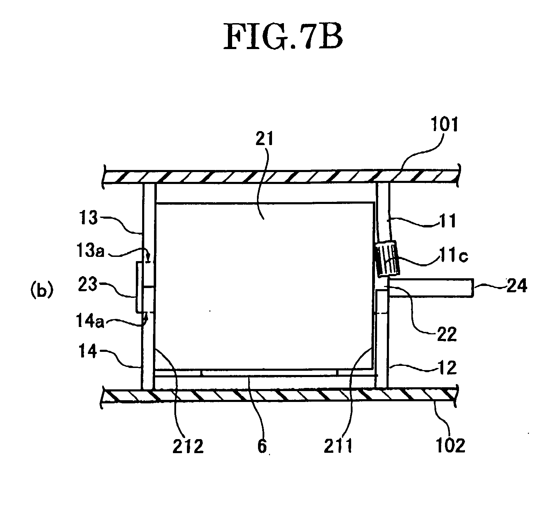

FIG.7 illustrates a third embodiment of the motor-mounting structure according to the present invention.

Meanwhile, in the motor-mounting structure S3 in the third embodiment, the identical reference numbers are attached to similar parts to the motor-mounting structures S1 and S2 in the first and second embodiments.

In the motor-mounting structure S3 in the third embodiment, elastic pinching arms 11c and 11c are provided on a leading end portion of the brackets 11. A size of each of the elastic pinching arms in an axial direction of the rotation shaft 24 of the motor 2 is formed to be larger than that of a root of the bracket 11.

In the motor-mounting structure S3 in the third embodiment, cylindrical elastic pinching arms 11c and 11c which are made of a resin or the like and integrally formed with the bracket 11 are provided on the leading end portions of the bracket 11.

Each of the cylindrical elastic pinching arms 11c, 11c has an outer diameter is set to be larger than a thickness in a vicinity of the plate-like root of the bracket 11.

In the motor-mounting structure S3 in the third embodiment, when the upper case portion 101 and the lower case portion 102 are fitted, a position of each of the brackets 11 and 13 in an axial direction of the motor is decided so that the cylindrical elastic pinching arms 11c and 11c are elastically deformed in the axial direction of the motor to be in contact with the end surface 211 of the motor 2.

In the motor-mounting structure S3 in this embodiment, structured in this way, because the elastic pinching arms 11c and 11c are formed in the cylindrical shape having the outer diameter larger than the thickness of the root of the bracket 11, it is possible to support the vicinity of the bearing portion 22 of the motor 2 with respect to the axial direction of the motor.

In other words, because each of the cylindrical elastic pinching arms 11c and 11c has the outer diameter larger than the thickness of the root of the bracket 11, the vicinity of the root of the bracket 11 does not contact with the end surface 211 of the motor 2, the elastic pinching arms 11c, 11c are in contact with the end surface 211.

So, because the elastic pinching arms 11c, 11c are provided on the leading end portion of the bracket 11, they are in contact with the end surface 211 in the vicinity of the bearing portion 22.

In this way, because the end surface 211 in the vicinity of the bearing portion 22 can be supported by the elastic pinching arms 11c, 11c, it is possible to support a reaction force in the axial direction of the motor 2 more efficiently and absorb vibration of the motor more efficiently.

In addition, because the elastic pinching arms 11c and 11c in the third embodiment are formed in the cylindrical shape, it is possible to equally distribute elastic reaction when pinching the bearing portion 22, or inner stress generated by elastic reaction when contacting with the end surface 211 of the motor 2.

Furthermore, as mentioned above, the motor can be slowly started and slowly stopped by the pulse width modulation controller, and thereby acceleration of the motor can be restrained to allow a reaction force by inertia to reduce.

Although the preferred embodiments of the present invention have been described in detail with reference to the drawings, it should be noted that the present invention is not limited to these embodiments, various modifications and changes can be made to the embodiments.

For example, in the aforementioned first and second embodiment, although each of the brackets 11, 12, 13 and 14 is in the form of plate, each of the brackets is not limited to the plate, and may be formed in any form of a protrusion, bar or the like, if the bracket has an appropriate elasticity when the slit is formed in the bracket.

Moreover, in the aforementioned first and second embodiments, although the slit 11b is formed only in the bracket 11, without being limited to this, slits 11b and 13b may be provided in both the brackets 11 and 13 supporting the opposite bearing portions 22 and 23 of the main body 21 of the motor 2.

With such a structure, an elastic reaction force is operated on all of places supporting the motor 2, and thereby it is possible to prevent the motor from loosening more efficiently regardless of accuracy of a resin forming of the brackets 11, 12, 13 and 14.

In the aforementioned first and second embodiments, although the slit 11b is provided in the upper bracket 11, without being limited to this, a slit may be provided in the lower bracket 12, slits may be provided in both the upper and lower brackets 11 and 12.

Moreover, in the aforementioned first embodiment, although the planar section 213 of the motor 2 and the fitted surface 15 provided on the case portion 102 are respectively provided on one place only, without being limited to this, by providing them on a plurality of places, it is possible to limit the movement of the motor more securely.

Also, in the aforementioned first embodiment, although the double-faced adhesive tape 6 is not provided between the planar section 213 and the fitted surface 15, without being limited to this, the double-faced adhesive tape 6 may be used to fix the motor more securely.

In the aforementioned second embodiment, although each of the elastic pinching arms 11c and 11c is formed in the cylindrical shape, without being limited to this, if each of the elastic pinching arms has a size larger than that of the root of the bracket 11, each of the elastic pinching arms may have any shapes such as a rectangular shape or the like.

### (Effect of the Invention)

In the motor-mounting structure according to the present invention, structured as mentioned above, the elastic pinching arms configured to hold elastically the bearing portions of the motor are provided on the leading end portion of one of the pair of brackets.

When mounting the motor, the facing elastic pinching arms are elastically deformed, and the bearing portion of the motor is press-fitted between the elastic pinching arms.

Consequently, on the rotation of the motor, even if the motor is subjected to a reaction force from the gears, the motor is prevented from having looseness, and vibration of the motor can be absorbed.

In addition, by providing the elastic pinching arms on the brackets at the opposite sides of the main body of the motor, because the motor can be fixed more securely, the looseness of the motor can be further reduced.

Because the distance between the brackets at the opposite sides of the main body of the motor is set to be smaller than the length of the main body of the motor, the brackets are elastically deformed in the axial direction of the motor to restrain the movement of the motor in the axial direction thereof securely.

Furthermore, because the side surface of the main body of the motor is formed to have the planar section and the case portion is formed to have the fitted surface fitting to the planar section, the motor can be fixed without being moved against the rotational torque due to the reaction on the rotation of the motor.

## Claims

1. A motor-mounting structure, comprising:
a case containing a motor including a main body and bearing portions provided on end surfaces of the main body to project from the end surfaces;
a pair of brackets provided on the case and configured to pinch the bearing portion of the motor in at least one side of the motor; and
elastic pinching arms provided on a leading end portion of one of the pair of brackets and configured to elastically pinch the bearing portion.

2. The motor-mounting structure according to claim 1, wherein
an interval between the elastic pinching arms is set to be smaller than an outer diameter of the bearing portion in a free state of the elastic pinching arms.

3. The motor-mounting structure according to claim 1 configured to mount the motor in which the bearing portions are provided on the end surfaces of the both sides of the main body to project from the end surfaces,
wherein the pair of brackets are configured to pinch elastically the bearing portions projected on the end surfaces of the both side of the main body, respectively and
the elastic pinching arms are provided on a leading end portion of one of the pair of brackets and configured to elastically pinch the bearing portion.

4. The motor-mounting structure according to claim 2, wherein
a distance between the brackets supporting the bearing portions provided to project from the both end surfaces of the main body is set to be smaller than a length of the main body of the motor.

5. The motor-mounting structure according to claim 1, wherein
the main body of the motor includes a planar section provided on a side surface of the main body and the case includes a fitted surface fitting to the planar section.

6. The motor-mounting structure according to claim 2, wherein
the main body of the motor includes a planar section provided on a side surface of the main body and the case includes a fitted surface fitting to the planar section.

7. The motor-mounting structure according to claim 1, wherein each of the elastic pinching arms has a cylindrical shape.

8. An actuator for a vehicle, comprising:
the motor-mounting structure according to claim 1.

9. The actuator for a vehicle according to claim 8,
further comprising a pulse width modulation controller configured to slowly start and slowly stop the motor.
